# EUROPEAN PATENT SPECIFICATION

(11) **EP 2 117 172 B1**
(45) Date of publication and mention of the grant of the patent: **02.03.2011**
(21) Application number: 08380141.5
(22) Date of filing: 07.05.2008
(51) Int. Cl.: H04L 12/28, H04L 12/56

(54) **Device for mobile ad-hoc networks**
Vorrichtung für ein Ad-hoc-Mobilfunknetz
Appareil pour réseaux mobiles ad-hoc

(43) Date of publication of application: 11.11.2009
(73) Proprietor: Fundación Robotiker, E-48170 Zamudio (Vizcaya) (ES)
(72) Inventor: Cabero Lopez, Jose Ma, 48170 Zamudio (Vizcaya) (ES); Arizaga Arcelus, Iñigo, 48170 Zamudio (Vizcaya) (ES); Sanchez Lekue, Aritz, 48170 Zamudio (Vizcaya) (ES); Unibaso Larrondo, Galder, 48170 Zamudio (Vizcaya) (ES); Miguel Villalba, Eder, 48170 Zamudio (Vizcaya) (ES)
(74) Representative: Carpintero Lopez, Francisco

(56) References cited:
- FR-A- 2 841 085
- GB-A- 2 428 802
- US-A1- 2006 046 653
- NATHAN EAGLE ET AL: "Reality mining: sensing complex social systems" PERSONAL AND UBIQUITOUS COMPUTING, SPRINGER VERLAG, LO, vol. 10, no. 4, 1 May 2006 (2006-05-01), pages 255-268, XP019381413 ISSN: 1617-4917

## Description

### Field of the Invention

The invention relates to the field of portable device detection systems, and more specifically to said systems for the MAN (Mobile Ad hoc Networks) environment.

### Background of the Invention

The characterization of the behavior of people is a key aspect of the research in different areas such as social networks, resource management or routing in mobile communications networks. The temporal, social and geographic patterns associated to the behavior of the people are aspects of which no one doubts their importance, but they are a challenge when trying to quantify and corroborate them by means of the compilation of reliable empirical data.

Most of the techniques used to date in the compilation of data on the behavior of the people are essentially based on questionnaires or on visual analysis, with the corresponding unwanted subjectivity they involve.

Ideally and to prevent any type of subjectivity, the process of the compilation of data must be independent both of the individuals under study and of the people performing it, such as the case of those techniques in which each individual has an electronic device which transparently compiles the desired data which shall be referred to as human traces (HT) hereinafter. The data forming the human traces (HT) can vary, depending on the interests of the study in question, but they generally always consist of an indicator reflecting if two devices are detected or not, and the instant of time in which this detection takes place. The detection or non-detection depends on different factors such as the coverage range of the devices, the deployment environment, the sampling speed of the devices, etc.

Until now, the most representative works based on this technique correspond to the Haggle Project: A. Chaintreau et al., "Impact of human mobility on the design of opportunistic forwarding algorithms," in Proceedings of the 25th IEEE International Conference on Computer Communications (INFOCOM), Barcelona, Spain, Apr. 2006 and to the experiments conducted in the Massachusetts Institute of Technology (MIT): N. Eagle and A. S. Pentland, "Reality mining: sensing complex social systems," Personal Ubiquitous Comput., vol. 10, no. 4, pp. 255-268, 2006, although other databases can be found on the Internet.

In the MIT study, mobile telephones with Bluetooth technology were deployed among members of the teaching staff and students. For several months, the mobile telephones compiled information of proximity when the telephones were within their Bluetooth operating range. From the point of view of the device used for the compilation of human traces (HT), the most representative characteristics are:
- The devices used for the compilation of human traces are cellular mobile terminals (Nokia 6600) with Bluetooth short range radio communications capacity.
- The sample period or granularity of the study for detecting other devices in its operating range is 5 minutes.
- Flash memory in each device to store the detections made.

The Haggle project in turn tries to extract conclusions with regard to the mobility of a human network to apply it to the field of communications routing in MAN.

Wireless ad hoc networks are decentralized wireless networks. The network is ad hoc because each node is arranged to re-send data to other nodes and the determination of which nodes re-send data is done dynamically, based on the connectivity of the network. This contrasts with wired networks in which the routers carry out the routing task. It also contrasts with managed or centralized wireless networks in which a special node, known as the access point, manages the communication between other nodes.

In turn, a mobile ad hoc network (MAN) is a type of wireless ad hoc network and it is a self-configured network formed by mobile routers (and associated hosts) connected by means of wireless links, the union of which forms an arbitrary topology. The routers are free to move and be organized arbitrarily; the wireless topology of the network can thus change quickly. This network can operate autonomously or it can be connected to the Internet. The routers or mobile devices communicate with one another either directly or through intermediate devices acting as communication bridges.

Out of the different scenarios studied by the Haggle project, only those based on Bluetooth technology can be considered reliable because the traces obtained by means of WiFi technology offer information regarding the frequency with which they access Internet and the places from where they access it, rather than offering information regarding the mobility of people. From the point of view of the device used for the compilation of HT, the most representative characteristics are:
- The devices used for the compilation of HT are Intel iMotes terminals with Bluetooth short range radio communications capacity.
- The sample period or granularity of the study for detecting other devices in its operating range is 2 minutes.
- Flash memory in each device to store the detections made.

In addition to the devices used in the previously mentioned studies, different devices with radio technology can be found on the market for being used in sensor and MAN networks, such as Motes from Crossbow (see http://www.xbow.com) or BTnode (see http://www.btnode.ethz.ch).

However, the devices existing today on the market used to work in MAN are multi-purpose and have certain limitations for obtaining the desired results, especially:

On one hand, none of the existing devices is able to discriminate when it is being carried by a person and when it has been left somewhere; in other words, they are not able to distinguish if the person who is carrying it has stopped or if, in contrast, he or she has taken it off and has left it somewhere. This is an enormous drawback when the device is used with mobile nodes, such as those corresponding to MIT and to the Haggle Project, because this type of information is necessary for assuring the reliability of the collected data.

On the other hand, none of the devices used in MAN is able to be directly synchronized with the remaining devices without requiring a considerable data exchange. In the case of devices dependent on a central network, as is the case of mobile telephones, these devices may have the synchronization of the central network, but it involves a considerable increase in data traffic. In addition to the increased data traffic in those synchronization techniques based on the transmission of the clock from some nodes to others, the obtained precision is low since variable delays are introduced in the processing of the intermediate nodes.

Furthermore, synchronization is especially important in applications with very high granularities, since in contrast, when the data of the different nodes is stored in common, events which occurred in different instants of time can be confused and considered as simultaneous. Therefore, synchronization is tightly connected to the granularity of the study, since the lower the granularity thereof is the greater the permittivity in the temporal error allowed. In the MIT and Haggle project studies, the granularity of 5 and 2 minutes, respectively, allow very large synchronization errors (up to 5 and 2 minutes, respectively) within which the network is able to organize the data chronologically, without precise synchronization methods. However, for measurements in which the granularity increases, a more precise synchronization is necessary so as not to confuse data which occurred in different instants of time.

In addition, the known devices detect movement at the expense of a considerable complexity, which causes other drawbacks. For example, the previously mentioned Crossbow devices allow attaching an external device with accelerometers which provide information about the movement. These devices have a high consumption and require processing.

Furthermore, in relation to the Crossbow devices, the radio technology used is 802.15.4, which is a technology aimed at sensor applications, i.e., short-range transmission and with very little information to be transmitted, in which there are nodes collecting information from sensors. This type of technology is not indicated for the MAN environment, in which all the nodes have the same technical characteristics and can communicate with one another.

In addition, even though some techniques for wireless communications, such as GSM, 802.15.4 or Bluetooth, contemplate in their specifications power control techniques to reduce interferences and minimize consumption, the implementation of these techniques is not always mandatory for radio module manufacturers. Furthermore, the terminals incorporating them do not allow the corresponding power modules to be handled by users or managers of the terminals. This is a considerable drawback in MAN networks, for example during the compilation of connectivity data, in which it can be necessary to adjust the coverage range depending on the specific characteristics or circumstances of the network.

The importance of granularity in MAN networks has previously been indicated. The granularity that can be obtained depends on the radio technology available and on the design of the device used. Theoretically, devices based on Bluetooth technology, such as the Intel Imote, the BTnode or mobile telephones, can reach a maximum granularity of 1.28 seconds with the Bluetooth version 2.0 specification. The Bluetooth protocol has two states: Inquiry and Inquiry Scan. These two states allow a device that is scanning the network (Inquiry state) to detect other devices (which are in the Inquiry Scan state) in its operating range. The frequency with which a device enters the Inquiry state determines the granularity of the study. Specifically, the Bluetooth 2.0 specification offers a minimum Inquiry time of 1.28 seconds, which is sufficient according to J. P. Kharoufeh, in "Bluetooth inquiry time characterization and selection," IEEE Transactions on Mobile Computing, vol. 5, no. 9, pp. 1173-1187, 2006, member-Brian S. Peterson and Senior Member-Rusty O. Baldwin, to theoretically discover 99% of the devices within the coverage range.

The attainment thereof would nevertheless involve very high memory and necessary power requirements. For example, in J.C. Cano, J.M. Cano, E. Gonzalez, C. Calafate, and P. Manzoni, "Evaluation of the energetic impact of bluetooth low-power modes for ubiquitous computing applications," in PE-WASUN '06: Proceedings of the 3rd ACM international workshop on Performance evaluation of wireless ad hoc, sensor and ubiquitous networks. New York, NY, USA: ACM Press, 2006, pp. 1-8, it has been proven that the Inquiry state doubles the consumption of the Inquiry Scan state.

However, in practice none of the studies conducted up until now with Bluetooth devices have reached said theoretical granularity: In the MIT (Bluetooth mobiles) and Haggle project (Intel Imotes) studies, the granularity is 5 and 2 minutes, respectively. These limitations are determined by battery problems in the first case and by memory limitations in the second case. These granularities cause many contacts between devices not to be recorded.

Finally, and in relation to granularity, known devices are not designed to perform very thorough data collection and recording, precisely because none of these devices has a high granularity. These devices are provided with a volatile memory (usually RAM) and with a non-volatile memory (usually FLASH) with a limited reading/writing capacity. For example, in the study conducted in MIT there were problems when the non-volatile memories of the mobile telephones were damaged since the reading/writing limit was reached, even with granularities as low as 5 minutes.

Some possible solutions, such as storing data in the non-volatile memory -which has no reading/writing limits -, has other drawbacks, such as the risk of losing all the information in event of power supply failures.

### Summary of the Invention

The invention solves the aforementioned drawbacks by means of a device designed to work in the environment of mobile ad hoc networks (MAN). The device is a communications device. It is furthermore a portable or mobile device, the mobility of which is due to the person carrying it.

On one hand, the device of the invention is aimed at obtaining human traces (HT) with high-granularity and high-reliability in mobile ad hoc networks (MAN).

On the other hand, the device is intended to be used as a routing protocol testing platform of mobile ad hoc networks (MAN).

Therefore, one of the aspects of the invention relates to a portable device designed to be used in a mobile ad hoc network (MAN) formed by a plurality of portable devices, and configured for the detection of said portable devices forming said MAN, comprising: a connectivity module in turn comprising: a radiofrequency module based on Bluetooth technology comprising a microprocessor and a memory configured to store connectivity data relating to the detection, by said device, of other similar portable devices comprised in a MAN; a transmitting/receiving antenna. The device further comprises: a movement module comprising a switch configured to detect the presence or absence of movement of the device, wherein said movement module is connected to a data input of said connectivity module; an inclination module comprising at least two inclination detectors configured to detect the relative position of said device; wherein the combination of the information obtained by the movement module and by the inclination module allows, for each device of said MAN detected by said device, discriminating if said detected device is being carried by an individual or if said detected device is not being carried by an individual.

Preferably, the combination of the information obtained by the movement module and by the inclination module allows distinguishing the following situations: when the inclination module and the movement module are in an ON state, it is decided that an individual is moving and carrying a device; when the inclination module is in an ON state and the movement module is in an OFF state, it is decided that an individual is resting and carrying a device; when the inclination module and the movement module are in an OFF state, it is decided that a device is not being carried by any individual, said device being at rest.

Preferably, the memory is FRAM memory.

Preferably, the device further comprises a synchronization module comprising a DCF77 receiver, configured such that said device shares the same time reference as the remaining portable devices comprised in the MAN in which it is being used, increasing the reliability of the samples obtained and allowing obtaining a granularity in the taking of samples to detect the presence of other devices lower than a certain threshold.

Preferably, the device further comprises a gain control module configured to regulate the power of the radio signal emitted through said transmitting/receiving antenna, wherein said gain control module is connected to said connectivity module, such that said device is able to control its coverage range through said gain control module.

The device further preferably comprises a power module comprising a battery. This power module preferably comprises a USB port through which said battery can be recharged and through which said connectivity data stored in said memory can be downloaded from said memory.

In another aspect of the invention, a MAN comprising a plurality of devices such as that previously described, configured as portable devices, is provided. This network further comprises at least one device such as that previously described configured as a beacon device.

In another aspect of the invention, the use of a device such as that described for the collection of connectivity data in a MAN is provided.

In another aspect of the invention, the use of a device such as that described as the routing protocol testing platform of a MAN is provided.

### Brief Description of the Drawings

For the purpose of aiding to better understand the features of the invention according to a preferred practical embodiment thereof and to complement this description, a set of drawings is attached as an integral part of this description having an illustrative and non-limiting character. In these drawings:
Figure 1 shows a diagram of a device according to the invention.
Figure 2 shows a photograph of the device of the invention while it is being carried by a user.
Figures 3A and 3B show respective photographs of the device of the present invention.
Figure 4 shows a detailed diagram of a device according to the invention.
Figure 5 shows an example of a MAN formed by a plurality of devices according to the invention.

### Detailed Description of the Invention

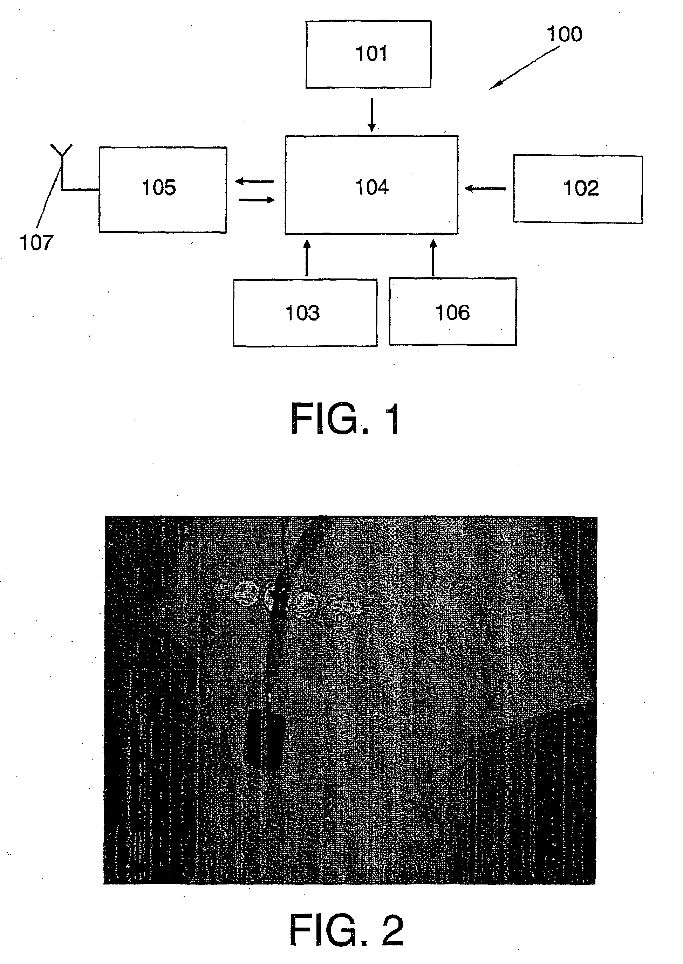

Figure 1 shows a device according to a possible embodiment of the invention. The device is intended for obtaining human traces (HT) with high-granularity and high-reliability in mobile ad hoc networks (MAN). The human traces are formed by the information of connectivity among all the devices participating during the time that a study lasts. There can be different data forming each piece of information of connectivity, depending on the interests of the study in question, but generally the data always consists of an indicator reflecting whether or not two devices are detected, and the instant of time in which this detection takes place. The detection or non-detection depends on different factors, such as the coverage range of the devices, the deployment environment, the sampling speed of the devices, etc.

The mobile device 100 of Figure 1 comprises a series of modules and a transmitting/receiving antenna 107:
- an inclination module 101, which allows detecting if a person is carrying the device 100 with him or her or if, in contrast, the device 100 is somewhere else;
- a movement module 102, which allows detecting if a device 100 is moving or stopped;
- a synchronization module 103, which allows all the devices 100 to share the same time reference;
- a connectivity module 104, which allows controlling the remaining modules, detecting other devices in the surrounding areas (in its coverage range) and locally storing said detections;
- a gain control module 105, which allows configuring the output power of the connectivity module 104. This module 105 acts as a bridge between the connectivity module 104 and the antenna 107;
- a power module 106, which allows supplying power to device 100 and transmitting the connectivity data stored in the connectivity module 104 out of the device.

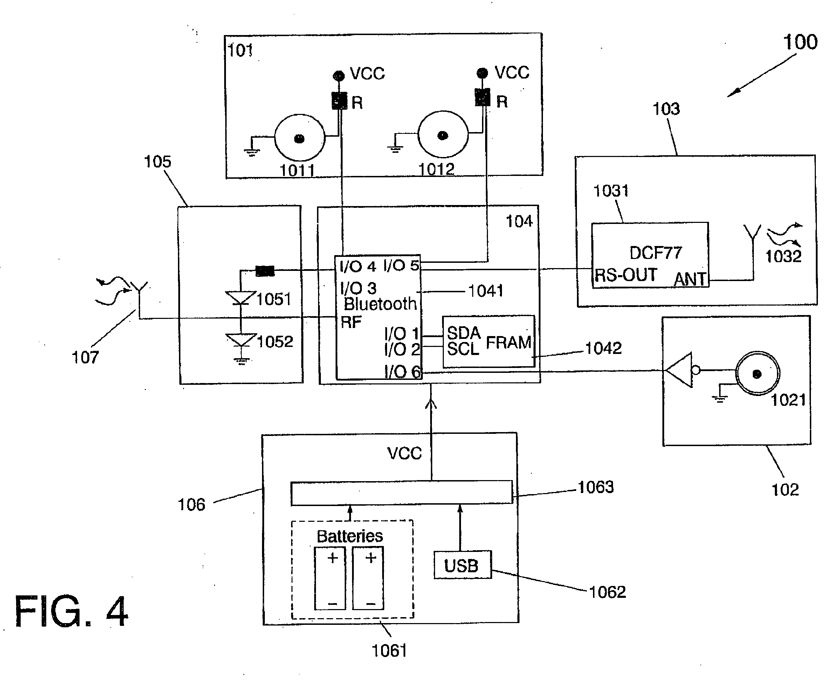

Each of the modules is explained in detail below in relation to Figures 1 and 4:

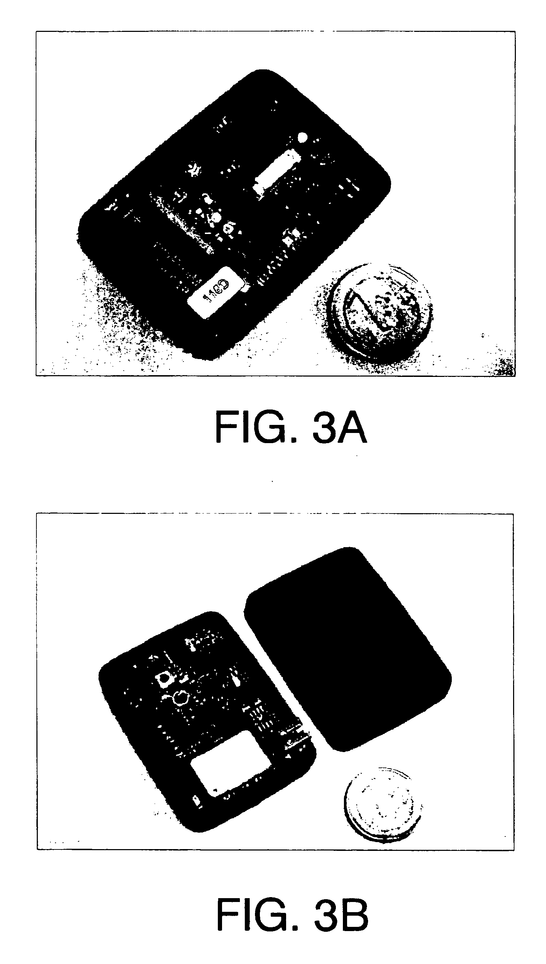

The inclination module 101 comprises at least two inclination detectors 1011 1012 which allow knowing when the device 100 is in the vertical position (for example, hanging from the neck of the individual who is carrying it) or in the horizontal position (for example, supported somewhere), and the direction of the positioning of the device (correct or reverse position). As can be seen in Figures 3A and 3B, the device 100 preferably has a rectangular shape. In this case, the vertical position of the device 100 relates to the position in which the longest side thereof is in a vertical plane in relation to the ground, i.e., the longest side of the device 100 is in a plane substantially perpendicular to the ground, whereas the shortest side of the device 100 is in a horizontal position in relation to the ground, i.e., in a plane parallel to the plane formed by the ground.

Without taking into account the thickness of the device 100, when the two sides (height and width) of the device 100 forming its front surface are in a plane horizontal to that of the ground, i.e., in a plane parallel to that of the ground (for example in Figures 3A and 3B, in which the device 100 is resting on the ground) then the position of the device 100 is considered horizontal. The vertical position is considered the correct position, i.e., when the two sides (height and width) of the device 100 forming its front surface are in a plane perpendicular to ground. In the case that the device 100 is hanging from the neck of a person carrying it, as shown in Figure 2, the position considered correct is the position in which the attachment ring attached to the cord is in the top part (as in Figure 2). The reverse or opposite position is considered when the attachment ring is in the bottom part of the device 100. Therefore, if the inclination module 101 indicates that the device 100 is in the vertical position, it can be deduced that the device 100 is being carried by a person, as shown in Figure 2. If, in contrast, the inclination module 101 indicates that the device 100 is in the horizontal position, it can be deduced that the device 100 has been deposited somewhere, i.e., no one is carrying it.

The movement module 102 comprises a movement detector based on a switch 1021 which is open or closed ("one" or "zero") according to the movement of the device 100. The switch 1021 is connected to the data input of the connectivity module 104 (very low consumption, due to the high impedance of the input module), in which the flow of ones and zeros is easily processed based on counters, and in which it is decided if the individual is moving or stopped based on previously analyzed patterns of the flow of ones and zeros. Therefore, a constant flow of ones and zeros indicates a person is moving, whereas a person is stopped or who is moving his or her body without actually moving from his or her place is characterized by the absence of flow or by a flow of short and inconstant ones and zeros.

As can be observed, the movement module 102 lacks an accelerometer because the information of interest is if the individual is stopped or in movement, and not the type of movement of the individual (walking, running, etc.). In addition, an accelerometer requires a high processing capacity (considerably higher than in the case of not including an accelerometer) in the device 100, to digitalize and process the output signal of said accelerometer. To that end, if an accelerometer was included, the device 100 would have a higher consumption and would require more powerful microprocessor and memories.

The combination of the inclination module 101 and the movement module 102 allows the detection of states of the person-device binomial, i.e., it allows distinguishing three states. Conventional devices do not allow discerning, based on the measurements taken, if the device is with the person who was first carrying it or if device and person are separated. In studies which attempt to characterize with the greatest possible reliability the behavior of the people, detecting these types of situations is essential for the reliability of the study. The state corresponding to the ON values in both modules indicates that the individual is carrying the device 100 with him or her and is moving. The state corresponding to ON in the inclination module 101 and OFF in the movement module 102 corresponds to the situation in which the person is stopped but is carrying the device 100. The state corresponding to the OFF values in both modules 101, 102 indicates that the individual is not carrying the device 100 with him or her. The synchronization module 103, which is described below, allows knowing when this last circumstance, since the synchronization module 103 is what marks the instants of time in which the HT are recorded. The HT include, among others, inclination and movement information. When the movement/inclination information is OFF in both modules in an instant 'T', this instant of time will not be taken into account because it corresponds to a situation in which the device 100 and the person are separated from one another. Therefore, this data should not be taken into account to preserve the reliability of the experiment. The state in which the inclination module 101 has the OFF value and the movement module 102 has the ON value is rather infrequent because it is due to unusual positions of the device 100 (for example, tangled in clothes) or to sudden movements of the individual (for example, jumping, running), making the device 100 bounce and change from the vertical to the horizontal position in very short time periods. The following Table I summarizes the possible states:

**Table I**

| | MOVEMENT CARRYING DEVICE | STOPPED CARRYING DEVICE | NOT CARRYING DEVICE | EXTREME SITUATIONS |
|---|---|---|---|---|
| INCLINATION MODULE | ON | ON | OFF | OFF |
| MOVEMENT MODULE | ON | OFF | OFF | ON |

Another aspect that must be taken into account when designing the device of the invention is the synchronization of the detections. Contacts between devices are recorded in each instant of time in each of the devices involved in the contact, therefore to process all this information later and according to a chronological order, it is necessary for all the deployed devices to share the same time reference. As indicated above, until now no device able to work in MAN networks has implemented a module focusing on obtaining the synchronization of the nodes or devices of the network in a separate manner and without depending on the characteristics of the network (it does not depend on any node of the network, rather synchronization is received from an external undisturbable element). In studies in which the information complied by the different nodes is made common, said synchronization is necessary. When high granularity is required, a very precise synchronization technique is needed.

The synchronization module 103 comprises a DCF77 receiver 1031 and its corresponding antenna 1032 for the synchronization signal, which allow maintaining the same time reference in all the devices 100. The devices conventionally used in MAN networks do not incorporate a DCF77 synchronization module.

As is known, DCF77 is a system comprising a long-wave time signal and a standard frequency radio station. Its main and backup transmitters are located in Mainflingen, approximately 25 Km southeast of Frankfurt, Germany. The 77.5 KHz carrier signal is generated from atomic clocks linked with the German master clocks in Braunschweig. With an emission power of 50 KW, this signal can be received in most of the European territory, reaching a distance of up to 2000 Km from Frankfurt.

When a device 100 commences its activity, the received DCF77 time reference is used to synchronize its local clock. If the device is restarted for any reason, the synchronization process with regard to the DCF77 signal is carried out again. Accordingly, all the devices 100 of the network are synchronized, allowing the information of connectivity generated as a result of the encounters among devices 100 to be coherent over time, and therefore the data collection process and subsequent processing is considerably streamlined and does not have chronological errors.

The connectivity module 104 is the heart of the device 100. It is based on a radio module 1041, which makes sweeps to detect devices within a certain range or coverage area. It comprises a radio module or Bluetooth 1041 and a memory 1042 in which the connectivity data of the device 100 it belongs to are stored (when a device detects another device in its Bluetooth range, this encounter is recorded in the memory).

The Bluetooth module 1041 comprises a Bluetooth chipset with its corresponding integrated antenna; both are responsible for radio communication with remaining devices. The Bluetooth module 1041 mainly comprises a microcontroller which executes the Bluetooth stack (stack of Bluetooth protocols) and controls the radio. There is connected to the Bluetooth module 1041 a flash memory in which the Bluetooth stack and the applications to be executed are stored. The connectivity module 104 is completed with a memory connected to the Bluetooth module 1041 through a port 12C. This memory is used to store the data generated during the operation of the device 100, i.e., the HT. The connectivity module 104 is connected to the remaining modules through ports of the Bluetooth module 1041. Figure 4 shows a general diagram of the (abstract) interconnection between the different modules.

Preferably, the memory 1042 is a FRAM memory (non-volatile). More preferably, it is a 512 Kbit capacity FRAM memory I2C.

The connectivity module 104 is responsible for controlling the operation of the remaining modules from the microprocessor of the Bluetooth module.

The device 100 is especially designed for the massive reading/writing of data, without the risk of damaging the memory by reaching the reading/writing limit or of losing data due to a lack of power. This is achieved as a result of the incorporation of the FRAM memory, with virtually unlimited reading/writing cycles and non-volatile, incorporating its own power supply, making it resistant to any power supply failure of the device 100. Conventional devices used in MAN networks do not incorporate FRAM memories. FRAM memory is incorporated in the device 100 of the invention because the memory is going to be used exhaustively, therefore a memory with a higher amount of reading/writing cycles than current non-volatile memories and which further assures the permanence of the data given a power supply failure is needed. In this sense, it is necessary to point out the importance of the storage capacity of the device. The device must have a memory that is able to store a large amount of connectivity records and support a very large number of reading/writing cycles. Otherwise, there will be contacts which cannot be recorded, or the memory of the device will perish by reaching the limit of reading/writing cycles, which would directly affect the reliability of the studies.

The gain control module 105 is connected to the connectivity module 104 to regulate the power of the radio signal that is going to be transmitted through the antenna 107 of the device 100. The lower the transmitted power is the lower the coverage range of the device 100. The module 105 is preferably based on a PIN diode 1051 or on a pair of PIN diodes 1051, 1052 which are responsible for regulating which part of the output power of the connectivity module 104 is aimed at the antenna 107. The amount of power which is aimed at the antenna 107 is controlled by varying the polarization current of the diode or diodes 1051 1052. Bluetooth technology has its own automatic power control according to standards that the network designer cannot control. The gain controller of the gain control module 105 provides the possibility of reducing the coverage range of the device 100 when it is considered relevant, which allows controlling the topology of the network.

Unlike conventional gain or power control modules, the module 105 of the device 100 provides the possibility that the network designer can manipulate the coverage range of the device regardless of the module or radio technology it is working with. This aspect is essential in MAN networks when compiling connectivity data, because it allows the nodes to modify their coverage range according to the conditions of the network (for example reducing its range in very compact networks in which the number of nearby devices is very high and a large coverage range is not only unnecessary but it can even be harmful).

Finally, the power module 106 comprises a preferably rechargeable battery or set of batteries 1061, and a USB module 1062. The battery 1061 is responsible for supplying power to the device 100 and the USB module 1062 is used as an interface to recharge the battery and is further used as a port to transmit the connectivity data stored in the device 100 to an external device. Both the battery 1061 and the USB module 1062 are connected to a power supply manager module 1063, comprised in the power module 106.

Figures 3A and 3B show respective photographs of the device 100.

The device that has just been described allows the compilation of human traces (HT), i.e., the sampling of human activity such that any activity can be recovered from the samples taken without losing significant events.

In this sense, a very important aspect is the granularity of the traces. The granularity relates to the sampling with which the devices prospect their surrounding areas in search of other devices in their operating range. The larger the sampling frequency is the higher the granularity. The higher the granularity is the greater the probability of recording all those occasions in which the two devices encounter one another in their range. In other words, the higher the granularity is the lower the probability of losing information. As previously indicated, a very high granularity implies the following drawbacks: a higher power expenditure of the device and a larger amount of data to be stored, i.e., higher memory capacity in the device, and a more thorough use of the reading/writing of the memory of the device. The event that is to be detected every time it occurs is the appearance of two devices within its operating range. Since the continued time in contact is variable and situation-dependent, a higher granularity allows detecting shorter contact periods.

Along this line, the device 100 achieves a granularity of up to 1.28 seconds, i.e., the maximum error in synchronization is 1.28 seconds. The Bluetooth technology of the connectivity module 104 provides this theoretical possibility, but it is not used in any commercial product due to the high consumption involved and because the purpose of Bluetooth technology is not to discover, but rather the communication between devices. However, in one of the applications of the device 100 (compilation of HT), the discovery of other devices is an objective in and of itself, therefore it is of interest to detect the devices as soon as possible (maximum granularity). Operating with such a high granularity limits the duration of the batteries and entails memory storage problems and even damage to memories, as occurs in the MIT and Haggle project studies. The device 100 is designed to operate with this granularity and solve the previous problems as a result of, among others, the power module 106 and the FRAM memory of the connectivity module 104. This is something that has not been achieved in any of the studies conducted up until now with conventional Bluetooth devices.

The rechargeable battery of the device 100 provides autonomy of about 48 hours with maximum granularity, i.e., 1.28 seconds (highest consumption situation). Furthermore, the FRAM memory has a capacity of 512 Kbits, which is sufficient for storing the connectivities detected every day and supports virtually unlimited reading/writing cycles.

Another important aspect in a device for taking human traces is reliability, which relates to all those aspects which endanger recording the detection of two neighboring devices, as well as the state they are in (in movement, stopped...). Recording any contact situation between devices is as important as the conditions in which said contact takes place. The device of the invention is configured to record proximities of other devices in its operating range, but what it actually attempts to measure is the proximity of the person associated to each device, therefore it is necessary to record both those situations in which the person is carrying the device and other situations in which the device is not with the person in question. Another important aspect is to distinguish between devices/people in movement or those in which the device/person is stopped. This type of information allows distinguishing when a person/device is static or in movement. Reliability is achieved by means of the combination of the movement module 102 and synchronization module 103, according to description provided above. Table I differentiates 4 possible states, which are those which give reliability to any compilation of HT made with this device 100. This is not achieved with any other existing device.

Another important technical aspect for the detection of a device by another device is the coverage range. It is considered that two devices are in contact when they are in their coverage range. The coverage range of the radio module of the devices demarcates the maximum distance at which two devices can communicate. Too large a coverage range makes the number of detections increase per device, considering devices which are rather far away as neighbors. At the same time, an increase of devices in the coverage range increases the level of interference, which results in delays in the detection of the devices and in the reduction of the bandwidth. In addition, a small coverage range filters a large part of the detectable devices, optimizing the time for detecting devices as well as the available bandwidth. In current devices, the coverage range is dependent on the radio technology of the device in question and the network administrator can do little or nothing to dynamically change it. If the coverage ranges are too large, each device will have a very large number of neighbors, which will increase interferences and collisions when the radio medium is accessed. A small coverage range further allows geographically limiting in a very precise manner any device it is connected to, which offers the possibility of using HT as a useful tool for locating/tracking devices (after processing the HT). The gain control module 105 allows dynamically reducing the coverage range according to guidelines established by the network administrator. The way to do this is by limiting the power of the radio signal by means of a PIN diode the polarization of which is controlled with the connectivity module 104.

The choice of the coverage range is a parameter depending on the nature of the network in which the device is to be used, but the general trend is to use small range technologies. Otherwise, there would be no way to differentiate in a simple manner which devices in contact are really close or not.

The device described above is mainly designed to carry out two functionalities: on one hand, the collection of connectivities between neighboring devices to obtain human traces (HT) in MAN, and on the other hand to be used as a routing protocol testing platform in MAN.

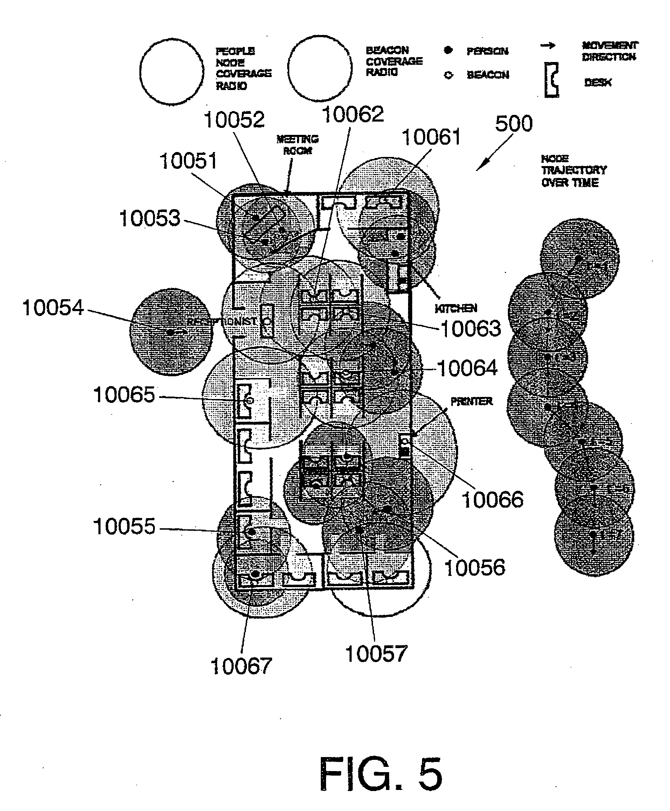

Figure 5 shows a MAN 500 example formed by a plurality of devices according to the invention. In this example, the MAN 500 is implemented in an office. The grey circles show the coverage range of the devices 100 10051 10052 10053 10054 10055 10056 10057 carried by the corresponding individuals, whereas the white circles show the coverage range of devices 10061 10062 10063 10064 10065 10066 10067 acting as beacons. Both devices (those carried by individuals and those acting as fixed beacons) are similar except in their configuration, which will be explained below. The function of the beacon devices 10061 10062 10063 10064 10065 10066 10067 is to detect as quickly as possible any device entering their coverage range. Since they are static devices, they are used as references to obtain the coordinates of the trajectories of the mobile devices 10051 10052 10053 10054 10055 10056 10057. The way of doing this is by means of mathematical algorithms which process the HT in order to obtain the trajectories of the mobile devices in the form of x, y coordinates.

The process of collecting connectivity data to generate human traces (HT) is the following:

As stated, the Bluetooth protocol has two states: Inquiry and Inquiry Scan. These two states allow a device 100 that is scanning the network (Inquiry state) to detect other devices 100 (which are in the Inquiry Scan state) in its operating range. The frequency with which a device 100 enters the Inquiry state determines the granularity of the study. The transitions between states are periodic: inquiry-inquiry scan-inquiry- inquiry scan... and so on and so forth. The duration of the state inquiry is fixed and the duration of the inquiry scan is variable from of 0.5 seconds to 1.28 seconds, randomly, as explained below. The alternation process is not part of the invention, rather it is what occurs with the technology. As previously stated, the device 100 10051 10052 10053 10054 10055 10056 10057 10061 10062 10063 10064 10065 10066 10067 of the invention allows a much higher granularity than that of the previously used devices. As a result, one of the main weak points of the studies conducted up until now is solved: the problem that two devices are in each other's operating range but they do not detect one another. The Bluetooth specification version 2.0 provides a minimum Inquiry time of 1.28 seconds, which is theoretically enough to discover 99% of the devices in the coverage range. Two devices that are simultaneously in the Inquiry state do not detect one another, therefore the devices must alternate the Inquiry and Inquiry Scan state successively, such that a compromise is reached between the discovery probability (a device in Inquiry state and the other one in Inquiry Scan) and the collision probability (both in the same state).

The devices have a dual functionality according to if they are devices associated to individuals 10051 10052 10053 10054 10055 10056 10057 or beacon devices 10061 10062 10063 10064 10065 10066 10067. Their hardware is the same but their software configuration is different:

The devices configured as mobile or portable devices 10051 10052 10053 10054 10055 10056 10057 alternate Inquiry state with a duration of 1.28 seconds with an Inquiry Scan state with a variable duration and so on and so forth. The duration of the Inquiry Scan ranges from 0.5 seconds to 1.28 seconds according to a pseudo-random uniform distribution which prevents the two devices from not detecting one another because their states are synchronized.

The devices configured as static devices (beacons) 10061 10062 10063 10064 10065 10066 10067 consist only of the Inquiry state repeated every 1.28 seconds, which assures the minimum time for detecting devices in the surrounding areas. As previously stated, the Inquiry state doubles the consumption of the Inquiry Scan state. However, this is not a problem in static devices 10061 10062 10063 10064 10065 10066 10067, because they are connected to the mains supply. It has been estimated that the mean time for detecting two devices which are in each other's operating range and with no other device in the surrounding areas is about 2 seconds. Therefore, in these conditions and in the worst case scenario, only those contacts with a duration of less than 2 seconds could go undetected. As can be observed, this considerably improves the results of the MIT and Haggle Project experiments (granularity two orders of magnitude higher than these two experiments).

At the end of each shift of collecting connectivities, all the devices 100 10051 10052 10053 10054 10055 10056 10057 10061 10062 10063 10064 10065 10066 10067 are connected to PCs via USB, such that the connectivity data stored in the FRAM memories is transferred from these PCs to a Control Center (CC), not shown in the figures. After this transfer, each device 100 10051 10052 10053 10054 10055 10056 10057 10061 10062 10063 10064 10065 10066 10067 completely erases its FRAM to leave it ready for the next data collection shift. The USB connection is further used to recharge the batteries of the devices. The entire process begins again when the individuals carry the devices 100 again.

The connectivity compilation phase is a redundant process because when two devices detect one another, regardless of which is in the Inquiry or Inquiry Scan state, the event is recorded in both devices, which is used as a security measure in the Control Center in case the devices could not suitably record this information.

A connectivity record between two devices has at least the following fields:
- The Bluetooth address of the device which has been discovered.
- Entrance time: the instant in which the device is discovered.
- Exit time: the instant in which the previously discovered device is no longer in the operating range.
- Movement bit: 1 if the movement module 102 records that the device is in movement, or 0 otherwise.
- Inclination bit: 1 if the inclination module 101 records that the device is in the vertical position, or 0 otherwise.

When two devices are in contact for more than 2 consecutive Inquiry intervals, only the first Inquiry (entrances time) and the last Inquiry (exit time) will be recorded.

The Control Center (CC) is responsible for processing all the connectivity data obtained over time and from which the HT is obtained.

With regard to the application of the devices of the invention as a routing protocol testing platform of mobile ad hoc networks (MANs), the connectivity module 104 of the device 100 has the functionality of supporting code functioning on the Bluetooth protocol stack, therefore any routing protocol can be installed and made to operate in the device 100. Therefore, a network 500 such as the one described in the previous section, formed by devices carried by people 10051 10052 10053 10054 10055 10056 10057 and others acting as beacons 10061 10062 10063 10064 10065 10066 10067, form a suitable testing platform for checking and refine the routing protocols previously developed in simulators.

In summary, the combination of the modules of the device of the invention solves the different problems derived from conventional devices and meets the necessary requirements of granularity and reliability.

In view of this description and set of drawings, a person skilled in the art will understand that the invention has been described according to preferred embodiments thereof, but that multiple variations can be introduced in said preferred embodiments without departing from the subject matter of the invention as it has been claimed.

## Claims

1. A portable device (100) designed to be used in a mobile ad hoc network (500) formed by a plurality of portable devices (100, 10051, 10052, 10053, 10054, 10055, 10056, 10057), and configured for the detection of said portable devices (10051, 10052, 10053, 10054, 10055, 10056, 10057) and for being detected by said portable devices (10051, 10052, 10053, 10054, 10055, 10056, 10057) forming said network (500), comprising:
- a connectivity module (104), in turn comprising:
- a radiofrequency module based on Bluetooth technology (1041) comprising a microprocessor and
- a memory (1042) configured to store connectivity data relating to the detection, by said device (100), of said other portable devices (10051, 10052, 10053, 10054, 10055, 10056, 10057) comprised in said mobile ad hoc network (500), each of said other portable devices (10051, 10052, 10053, 10054, 10055, 10056, 10057) also comprising a connectivity module in turn comprising a radiofrequency module based on Bluetooth technology;
- a transmitting/receiving antenna (107);
**characterized in that** said device (100) comprises:
- a movement module (102) comprising a switch (1021) configured to detect the presence or absence of movement of the device (100), wherein said movement module (102) is connected to a data input (I/O6) of said connectivity module (104) for providing said connectivity module (104) with said information about the presence or absence of movement of the device (100);
- an inclination module (101) comprising at least two inclination detectors (1011, 1012) configured to detect the relative position of said device (100), wherein said inclination module (101) is connected to said connectivity module (104) for providing said connectivity module (104) with said information about the relative position of said device (100);
wherein said connectivity module (104) is configured to transmit through said transmitting/receiving antenna (107) the combination of said information obtained from the movement module (102) and from the inclination module (101) in such a way that the connectivity module of at least one of said devices (10051, 10052, 10053, 10054, 10055, 10056, 10057) comprised in said mobile ad hoc network (500) can receive and detect said combination of information from the device (100), in such a way that said at least one device (10051, 10052, 10053, 10054, 10055, 10056, 10057) receiving and detecting said combination of information is capable of discriminating whether said detected device (100) is being carried by an individual or not.

2. The device according to claim 1, wherein said combination of the information obtained by the movement module (102) and by the inclination module (101) allows distinguishing the following situations: when the inclination module (101) and the movement module (102) are in an ON state, it is decided that an individual is moving and carrying a device; when the inclination module (101) is in an ON state and the movement module (102) is in an OFF state, it is decided that an individual is resting and carrying a device; when the inclination module (101) and the movement module (102) are in an OFF state, it is decided that a device is not being carried by any individual, said device being at rest.

3. The device according to any of claims 1 or 2, wherein said memory (1042) is a FRAM memory.

4. The device according to any of the previous claims, further comprising a synchronization module (103) comprising a DCF77 receiver (1031), configured such that said device (100) shares the same time reference as the remaining devices (10051, 10052, 10053, 10054, 10055, 10056, 10057) comprised in the network (500) in which it is being used, increasing the reliability of the samples obtained and allowing obtaining a granularity in the taking of samples to detect the presence of other devices lower than a certain threshold.

5. The device according to any of the previous claims, further comprising a gain control module (105) configured to regulate the power of the radio signal emitted through said transmitting/receiving antenna (107), wherein said gain control module (105) is connected to said connectivity module (104), such that said device (100) is able to control its coverage range through said gain control module (105).

6. The device according to any of the previous claims, further comprising a power module (106) comprising a battery (1061).

7. The device according to claim 6, wherein said power module (106) further comprises a USB port (1062) through which said battery (1061) can be recharged and through which said connectivity data stored in said memory can be downloaded from said memory.

8. A mobile ad hoc network (500) comprising a plurality of devices according to any of claims 1 to 7, configured as portable devices (10051, 10052, 10053, 10054, 10055, 10056, 10057).

9. The mobile ad hoc network (500) according to claim 8, further comprising at least one device according to any of claims 1 to 7 configured as a beacon device (10061, 10062, 10063, 10064, 10065, 10066, 10067).

10. The use of the device (100) according to any of claims 1 to 7 for collecting connectivity data in a mobile ad hoc network (500) comprising a plurality of devices according to any of claims 1-7.

11. The use of the device (100) according to any of claims 1 to 7 as a routing protocol testing platform of a mobile ad hoc network comprising a plurality of devices according to any of claims 1-7.

## Patentansprüche

1. Tragbare Vorrichtung (100), die zur Verwendung in einem mobilen Ad-hoc-Netzwerk (500) bestimmt ist, das durch eine Vielzahl tragbarer Vorrichtungen (100, 10051, 10052, 10053, 10054, 10055, 10056, 10057) gebildet wird und das für die Erfassung der tragbaren Vorrichtungen (10051, 10052, 10053, 10054, 10055, 10056, 10057) sowie zur Erfassung durch die tragbaren Vorrichtungen (10051, 10052, 10053, 10054, 10055, 10056, 10057) konfiguriert ist, die das Netzwerk (500) bilden, wobei die Vorrichtung umfasst:
ein Vernetzungs-Modul (104), das seinerseits umfasst:
ein Funkfrequenz-Modul, das auf Bluetooth-Technologie (1041) basiert und einen Mikroprozessor umfasst, und
einen Speicher (1042), der so konfiguriert ist, dass er Vernetzungs-Daten speichert, die sich auf die Erfassung der anderen tragbaren Vorrichtungen (10051, 10052, 10053, 10054, 10055, 10056, 10057), die in dem mobilen Ad-hoc-Netzwerk (500) enthalten sind, durch die Vorrichtung (100) beziehen, wobei jede der anderen tragbaren Vorrichtungen (10051, 10052, 10053, 10054, 10055, 10056, 10057) ebenfalls ein Vernetzungs-Modul umfasst, das seinerseits ein Funkfrequenz-Modul umfasst, das auf Bluetooth-Technologie basiert;
eine Sende-/Empfangsantenne (107);
**dadurch gekennzeichnet, dass** die Vorrichtung (100) umfasst:
ein Bewegungs-Modul (102), das einen Schalter (1021) umfasst, der so konfiguriert ist, dass er das Vorhandensein oder Nichtvorhandensein von Bewegung der Vorrichtung (100) erfasst, wobei das Bewegungs-Modul (102) mit einem Dateneingang (I/O6) des Vernetzungs-Moduls (104) verbunden ist, um dem Vernetzungs-Modul (104) die Information über das Vorhandensein oder Nichtvorhandensein von Bewegung der Vorrichtung (100) bereitzustellen;
ein Neigungs-Modul (101), das wenigstens zwei Neigungs-Detektoren (1011, 1012) umfasst, die so konfiguriert sind, dass sie die relative Position der Vorrichtung (100) erfassen, wobei das Neigungs-Modul (101) mit dem Vernetzungs-Modul (104) verbunden ist, um dem Vernetzungs-Modul (104) die Information über die relative Position der Vorrichtung (100) bereitzustellen;
wobei das Vernetzungs-Modul (104) so konfiguriert ist, dass es über die Sende-/Empfangsantenne (107) die Kombination der von dem Bewegungs-Modul (102) und von dem Neigungs-Modul (101) bezogenen Informationen so sendet, dass das Vernetzungs-Modul wenigstens einer der Vorrichtungen (10051, 10052, 10053, 10054, 10055, 10056, 10057), die in dem mobilen Ad-hoc-Netzwerk (500) enthalten sind, die Kombination von Informationen von der Vorrichtung (100) so empfangen und erfassen kann, dass die wenigstens eine Vorrichtung (10051, 10052, 10053, 10054, 10055, 10056, 10057), die die Kombination von Informationen empfängt und erfasst, in der Lage ist, zu unterscheiden, ob die erfasste Vorrichtung (100) von einer Person getragen wird oder nicht.

2. Vorrichtung nach Anspruch 1, wobei die Kombination der Informationen, die durch das Bewegungs-Modul (102) und durch das Neigungs-Modul (101) bezogen werden, die Unterscheidung der folgenden Situationen zulässt:
wenn sich das Neigungs-Modul (101) und das Bewegungs-Modul (102) in einem AN-Zustand befinden, wird festgestellt, dass sich eine Person bewegt und eine Vorrichtung trägt;
wenn sich das Neigungs-Modul (101) in einem AN-Zustand befindet und sich das Bewegungs-Modul (102) in einem AUS-Zustand befindet, wird festgestellt, dass sich eine Person im Ruhezustand befindet und eine Vorrichtung trägt;
wenn sich das Neigungs-Modul (101) und das Bewegungs-Modul (102) in einem AUS-Zustand befinden, wird festgestellt, dass die Vorrichtung nicht von einer Person getragen wird und dass sich die Vorrichtung im Ruhezustand befindet.

3. Vorrichtung nach einem der Ansprüche 1 oder 2, wobei der Speicher (1042) ein FRAM-Speicher ist.

4. Vorrichtung nach einem der vorangehenden Ansprüche, die des Weiteren ein Synchronisationsmodul (103) umfasst, das einen DCF77-Empfänger (1031) umfasst, der so konfiguriert ist, dass die Vorrichtung (100) den gleichen Zeitbezug nutzt wie die verbleibenden Vorrichtungen (10051, 10052, 10053, 10054, 10055, 10056, 10057), die in dem Netzwerk (500) enthalten sind, in dem sie eingesetzt wird, wodurch die Zuverlässigkeit der ermittelten Abtastwerte erhöht wird und es möglich ist, eine Granularität beim Erfassen von Abtastwerten zum Erfassen des Vorhandenseins anderer Vorrichtungen zu erreichen, die unter einem bestimmten Schwellenwert liegt.

5. Vorrichtung nach einem der vorangehenden Ansprüche, die des Weiteren ein Verstärkungssteuer-Modul (105) umfasst, das konfiguriert ist, dass es die Leistung des über die Sende-/Empfangsantenne (107) emittierten Funksignals reguliert, wobei das Verstärkungssteuer-Modul (105) mit dem Vernetzungs-Modul (104) verbunden ist, so dass die Vorrichtung (100) ihren Abdeckungsbereich über das Verstärkungsregelungs-Modul (105) steuern kann.

6. Vorrichtung nach einem der vorangehenden Ansprüche, die des Weiteren ein Strom-Modul (106) umfasst, das eine Batterie (1061) umfasst.

7. Vorrichtung nach Anspruch 6, wobei das Strom-Modul (106) des Weiteren einen USB-Anschluss (1062) umfasst, über den die Batterie (1061) aufgeladen werden kann und über den die in dem Speicher gespeicherten Vernetzungs-Daten aus dem Speicher heruntergeladen werden können.

8. Mobiles Ad-hoc-Netzwerk (500), das eine Vielzahl von Vorrichtungen nach einem der Ansprüche 1 bis 7 umfasst, die als tragbare Vorrichtungen (10051, 10052, 10053, 10054, 10055, 10056, 10057) konfiguriert sind.

9. Mobiles Ad-hoc-Netzwerk (500) nach Anspruch 8, das des Weiteren wenigstens eine Vorrichtung nach einem der Ansprüche 1 bis 7 umfasst, die als eine Beacon-Vorrichtung (10061, 10062, 10063, 10064, 10065, 10066, 10067) konfiguriert ist.

10. Einsatz der Vorrichtung (100) nach einem der Ansprüche 1 bis 7 zum Erfassen von Vernetzungs-Daten in einem mobilen Ad-hoc-Netzwerk (500), das eine Vielzahl von Vorrichtungen nach einem der Ansprüche 1-7 umfasst.

11. Einsatz der Vorrichtung (100) nach einem der Ansprüche 1 bis 7 als eine Routing-Protokoll-Testplattform eines mobilen Ad-hoc-Netzwerks, das eine Vielzahl von Vorrichtungen nach einem der Ansprüche 1-7 umfasst.

## Revendications

1. Dispositif portable (100) destiné à être utilisé dans un réseau ad hoc de mobiles (500) formé d'un ensemble de dispositifs portables (100, 10051, 10052, 10053, 10054, 10055, 10056, 10057), et configuré pour la détection des dispositifs portables (10051, 10052, 10053, 10054, 10055, 10056, 10057), et pour être détecté par les dispositifs portables (10051, 10052, 10053, 10054, 10055, 10056, 10057), formant le réseau (500),
dispositif comprenant :
- un module de connexion (104) comprenant lui-même :
* un module radiofréquence fondé sur la technique Bluetooth (1041) avec un microprocesseur, et
* une mémoire (1042) configurée pour enregistrer les données de connexion relatives à la détection par le dispositif (100), les autres dispositifs portables (10051, 10052, 10053, 10054, 10055, 10056, 10057) du réseau ad hoc mobile (500), chacun des autres dispositifs portables (10051, 10052, 10053, 10054, 10055, 10056, 10057), ayant également un module de connexion comportant lui-même un module radiofréquence fondé sur la technique Bluetooth,
- une antenne d'émission/réception (107),
dispositif (100) **caractérisé en ce qu'**il comprend :
- un module de mouvement (102) ayant un commutateur (1021) configuré pour détecter la présence ou l'absence de mouvement du dispositif (100), ce module de mouvement (102) étant relié à une entrée de données (I/O6) du module de connexion (104) pour fournir au module de connexion (104), l'information relative à l'existence ou non du mouvement du dispositif (100),
- un module d'inclinaison (101) ayant au moins deux détecteurs d'inclinaison (1011, 1012) configurés pour détecter la position relative du dispositif (100), le module d'inclinaison (101) étant relié au module de connexion (104) pour fournir au module de connexion (104), l'information concernant la position relative du dispositif (100),
- le module de connexion (104) étant configuré pour transmettre par l'antenne d'émission/réception (107), la combinaison de l'information fournie par le module de mouvement (102) et celle module d'inclinaison (101), de façon que le module de connexion d'au moins l'un des dispositifs (10051, 10052, 10053, 10054, 10055, 10056, 10057) faisant partie du réseau ad hoc de mobiles (500) puisse recevoir et détecter la combinaison d'informations du dispositif (100) de manière qu'au moins un dispositif (10051, 10052, 10053, 10054, 10055, 10056, 10057) recevant et détectant la combinaison d'informations puisse distinguer si le dispositif détecté (100) est porté ou non par un individu.

2. Dispositif selon la revendication 1,
dans lequel
la combinaison d'informations fournie par le module de mouvement (102) et le module d'inclinaison (101), permet de distinguer les situations suivantes :
- si le module d'inclinaison (101) et le module de mouvement (102) sont en position de fonctionnement, on considère qu'un individu portant le dispositif est en mouvement,
- si le module d'inclinaison (101) est en fonctionnement et que le module de mouvement (102) est coupé, on considère que l'individu est au repos et qu'il porte le dispositif,
- si le module d'inclinaison (101) et le module de mouvement (102) sont arrêtés, on considère que le dispositif n'est pas porté par un individu et qu'il est à l'arrêt.

3. Dispositif selon la revendication 1 ou 2,
dans lequel
la mémoire (1042) est une mémoire FRAM.

4. Dispositif selon l'une quelconque des revendications précédentes comportant en outre :
un module de synchronisation (103) avec un récepteur DCF77 (1031) configuré de façon que ce dispositif (100) partage la même référence de temps que les autres dispositifs (10051, 10052, 10053, 10054, 10055, 10056, 10057) du réseau (500) dans lequel il est utilisé, on augmente la fiabilité des échantillons obtenus et on autorise une granularité en prenant des échantillons pour détecter la présence des autres dispositifs en dessous d'un certain seuil.

5. Dispositif selon l'une quelconque des revendications précédentes comportant en outre un module de commande de gain (105) configuré pour réguler la puissance du signal radio émis par l'antenne d'émission/réception (107),
le module de commande de gain (105) étant relié au module de connexion (104) de façon que ce dispositif (100) puisse commander sa plage de couverture par le module de commande de gain (105).

6. Dispositif selon l'une quelconque des revendications précédentes comportant en outre un module de puissance (106) avec une batterie (1061).

7. Dispositif selon la revendication 6,
**caractérisé en ce que**
le module de puissance (106) comporte en outre un port USB (1062) permettant de recharger la batterie (1061) et de charger les données de connexion enregistrées dans la mémoire à partir de la mémoire.

8. Réseau ad hoc mobiles (500) comportant un ensemble de dispositifs selon l'une quelconque des revendications 1 à 7, configurés comme des dispositifs portables (10051, 10052, 10053, 10054, 10055, 10056, 10057).

9. Réseau ad hoc de mobiles (500) selon la revendication 8, comportant en outre au moins un dispositif selon l'une quelconque des revendications 1 à 7, configuré comme dispositif de secours (10061, 10062, 10063, 10064, 10065, 10066, 10067).

10. Utilisation du dispositif (100) selon l'une quelconque des revendications 1 à 7, pour collecter des données de connexion dans un réseau ad hoc de mobiles (500) ayant un ensemble de dispositifs selon l'une quelconque des revendications 1 à 7.

11. Utilisation du dispositif (100) selon l'une quelconque des revendications 1 à 7, comme plate-forme de contrôle de protocole de routage d'un réseau ad hoc de mobiles ayant un ensemble de dispositifs selon l'une quelconque des revendications 1 à 7.
